(19)

(11) **EP 3 413 381 B1**

(12) **EUROPEAN PATENT SPECIFICATION**


(45) Date of publication and mention of the grant of the patent:
**10.08.2022 Bulletin 2022/32**

(21) Application number: **18176589.2**

(22) Date of filing: **07.06.2018**

(51) International Patent Classification (IPC):
***H01M 4/32*** *(2006.01)* ***H01M 4/52*** *(2010.01)*
***H01M 4/80*** *(2006.01)* ***H01M 10/30*** *(2006.01)*

(52) Cooperative Patent Classification (CPC):
**H01M 4/32; H01M 4/52; H01M 4/806; H01M 4/808; H01M 10/30;** Y02E 60/10; Y02P 70/50


(54) **NON-SINTERED POSITIVE ELECTRODE FOR ALKALINE SECONDARY BATTERY AND ALKALINE SECONDARY BATTERY INCLUDING NON-SINTERED POSITIVE ELECTRODE**

NICHTGESINTERTE POSITIVE ELEKTRODE FÜR ALKALISCHE SEKUNDÄRBATTERIE UND ALKALISCHE SEKUNDÄRBATTERIE MIT EINER NICHTGESINTERTEN POSITIVELEKTRODE

ÉLECTRODE POSITIVE NON FRITTÉE POUR BATTERIE SECONDAIRE ALCALINE ET BATTERIE ALCALINE SECONDAIRE COMPRENANT UNE ÉLECTRODE POSITIVE NON FRITTÉE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2017 JP 2017114614**

(43) Date of publication of application:
**12.12.2018 Bulletin 2018/50**



(73) Proprietor: **FDK Corporation**
**Tokyo 108-8212 (JP)**

(72) Inventors:
- **Yamane, Tetsuya**
  **Tokyo, 108-8212 (JP)**
- **Tanimoto, Yuya**
  **Tokyo, 108-8212 (JP)**
- **Imoto, Yuzo**
  **Tokyo, 108-8212 (JP)**
- **Asanuma, Hideyuki**
  **Tokyo, 108-8212 (JP)**

(74) Representative: **Epping - Hermann - Fischer Patentanwaltsgesellschaft mbH**
**Schloßschmidstraße 5**
**80639 München (DE)**



(56) References cited:
**JP-A- H10 154 525** **US-A1- 2001 008 729**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 3 413 381 B1

## Description

BACKGROUND OF THE INVENTION

### Field of the Invention

The present invention relates to a non-sintered positive electrode for an alkaline secondary battery and an alkaline secondary battery including the non-sintered positive electrode.

### Description of the Related Art

A sintered positive electrode and a non-sintered positive electrode are known as positive electrodes that are used in alkaline secondary batteries.

For example, the sintered positive electrode is produced as follows.

First, a sintered porous nickel substrate that is obtained by making nickel powders held and sintered in a positive electrode core member formed of a nickel-plated punching metal sheet is prepared. The sintered porous nickel substrate is immersed in a nickel salt solution such as a nickel nitrate aqueous solution, and subsequently, is immersed in an alkaline aqueous solution. By this process, nickel hydroxide as a positive electrode active material is made in the sintered porous nickel substrate, and thereby, the sintered positive electrode is produced. The sintered positive electrode has the advantage of an excellent high-current discharge characteristic, because the sintered porous nickel substrate has a high power collection performance. However, it is difficult to increase the porosity of the substrate. Therefore, it is hard to increase the amount of nickel hydroxide as the positive electrode active material, and there is a limitation to the increase in capacity. Further, the sintered positive electrode is produced by the multistep process, resulting in a troublesome production work. Therefore, there is a problem in that the production of the sintered positive electrode requires a large production cost.

On the other hand, the non-sintered positive electrode is produced by filling a positive electrode active material slurry containing fine particles of nickel hydroxide as the positive electrode active material, in a foamed nickel (positive electrode core member) having a three-dimensional network structure, and performing pressure forming after drying (for example, Japanese Patent Laid-Open No. 60-131765). The non-sintered positive electrode makes it possible to increase the filling amount of nickel hydroxide, and therefore, allows a higher capacity than the sintered positive electrode because the capacity per unit volume is high. Further, the production work for the non-sintered positive electrode is simpler than that for the sintered positive electrode, and makes it possible to keep the production cost low. Therefore, in alkaline secondary batteries, the non-sintered positive electrode is widely used.

Here, as one of the alkaline secondary batteries, a closed nickel hydride secondary battery is known. The closed nickel hydrogen secondary battery is produced by putting an electrode group in an outer can having a bottomed cylindrical shape, together with an alkaline electrolyte, and sealing and closing an upper end opening of the outer can with a sealing member. The electrode group is formed such that a positive electrode and a negative electrode are overlapped in a state where a separator is interposed between them.

Meanwhile, when the nickel hydride secondary battery is in an overcharge state, oxygen gas is generated in the positive electrode. When the amount of the generated oxygen gas increases, the pressure in the closed battery rises, causing a problem of the leakage of the alkaline electrolyte by the actuation of a safety valve. For avoiding the problem, the closed nickel hydride secondary battery employs a so-called positive electrode restriction technique in which the capacity of the negative electrode is set to a higher value than the capacity of the positive electrode. By employing the positive electrode restriction technique, the oxygen gas generated in the positive electrode at the time of the overcharge passes through the separator, reaches the negative electrode, and then, is absorbed by an absorption reaction on the surface of a hydrogen storing alloy corresponding to the surplus capacity of the negative electrode. Thus, even in the case of the overcharge, since the closed nickel hydride secondary battery has a function to cause the oxygen absorption reaction, the rise in the internal pressure of the battery is suppressed.

In recent years, alkaline secondary batteries are used for various use purposes, and as a use example, there is a backup power source.

In the backup power source, a continuous charge is usually performed. When the continuous charge is performed in this way, the positive electrode is constantly in the overcharge state, and constantly generates oxygen gas.

Here, in the non-sintered positive electrode, the binding strength between the positive electrode core member and the positive electrode active material and the binding strength between positive electrode active materials are lower than in the sintered positive electrode. When oxygen gas is constantly generated in the non-sintered positive electrode having a relatively low binding strength, the interface between the positive electrode core member and the positive electrode active material and the interface between the positive electrode active materials are broken away at some parts, and many relatively large bubble spaces are easily generated in the positive electrode. When relatively large bubble spaces are generated in the positive electrode, the positive electrode expands and the alkaline electrolyte enters the spaces, so that a so-called positive electrode swelling occurs. When the positive electrode swelling occurs, the alkaline electrolyte decreases in the separator, so that a so-called dryout phenomenon occurs. As a result, the life of the battery decreases.

For preventing the occurrence of the dryout phenomenon, there can be a measure of pouring a large amount of alkaline electrolyte into the battery in advance. However, since the volume of the interior of the battery is fixed, when the amount of the alkaline electrolyte to be poured in the battery is increased, the amount of active materials needs to be decreased by an amount equivalent to the increase. When the amount of the active materials that are constituent elements directly involved with the capacity of the battery is decreased in this way, it is difficult to secure a desired battery capacity. Further, in some cases, it is difficult to pour a relatively large amount of alkaline electrolyte into the battery, considering the balance between the internal pressure and liquid leakage in the battery.

Thus, the improvement in the life of the battery to be used as the backup power source requiring the continuous charge is insufficient even now.

US 2001/008729 A1 relates to a positive electrode active material for alkaline storage batteries, wherein a surface of a nickel hydroxide is coated with a mixed crystal material of at least one type of element selected from aluminum Al, manganese Mn, iron Fe, yttrium Y, ytterbium Yb, erbium Er, and gadolinium Gd and cobalt, the valence of nickel in the nickel hydroxide is in the range of 2.0 to 2.3, and the valence of cobalt in the mixed crystal material exceeds 3.0. The positive electrode active material for alkaline storage batteries is used for a positive electrode for alkaline storage batteries, and the positive electrode for alkaline storage batteries is further used for an alkaline storage battery. In paragraph [0054], the production of a positive electrode is described: "100 g of the positive electrode active material powder and 20 g of a 1 wt % solution of methyl cellulose were kneaded to prepare a paste. A porous base material composed of a nickel-plated foamed metal having a degree of porosity of 95% and having an average pore diameter of 200 $\mu$m was filled with the paste. The base material filled with the paste was dried and was then formed by pressure, to obtain nickel for alkaline storage batteries".

JP H10 154525 A relates to an alkaline storage battery, wherein a separator composed of polypropylene-made nonwoven fabric is interposed between a positive electrode and a negative electrode, and is wound in a spiral shape, and electrode groups are made. These electrode groups and alkaline electrolyte are housed in a vessel, and a non-active cylindrical Ni hydrogen storage battery is assembled. Next, after ageing is performed for 72 hours in an atmosphere of 25°C, initial charge to charge 200% in 0.1C is performed, and discharge is performed up to 1.0v in 0.2C. Afterwards, after 200% charge is performed in 0.1C at a room temperature, a cycle to perform discharge up to 1.0v in 0.2C is performed by five cycles, and a battery is manufactured. In paragraphs [0046] to [0048], a porous base material composed of a nickel-plated fibre substrate having a degree of porosity of 95% is filled with a Co-coated nickel hydroxide active material.

## SUMMARY OF THE INVENTION

The present invention has been made based on the above circumstances, and an object thereof is to provide a non-sintered positive electrode that makes it possible to suppress the swelling of the positive electrode at the time of the continuous charge, and to increase the life of the battery when the continuous charge is performed, compared to the related art, and an alkaline secondary battery including the non-sintered positive electrode.

The present invention provides a non-sintered positive electrode for an alkaline secondary battery according to claim 1, and an alkaline secondary battery according to claim 7. Preferred embodiments are set forth in the dependent claims.

The non-sintered positive electrode in the present invention includes the surface layer containing nickel. At the time of the continuous charge of the battery, oxygen gas is preferentially generated at a portion of the surface layer, and therefore, the generation of oxygen gas in the interior of the positive electrode is reduced. Therefore, in the interior of the positive electrode, it is possible to suppress the generation of relatively large bubble spaces associated with the generation of oxygen gas, and to suppress the swelling of the positive electrode. As a result, the dryout phenomenon is hard to occur, and it is possible to increase the life of the battery when the continuous charge is performed, compared to the related art. Therefore, the alkaline secondary battery including the non-sintered positive electrode in the present invention increases the life when the alkaline secondary battery is used as a backup power source requiring the continuous charge, compared to the related art.

## BRIEF DESCRIPTION OF THE DRAWINGS

FIG. 1 is a perspective view of a nickel hydride secondary battery according to an embodiment of the present invention, in which the nickel hydride secondary battery is partially broken;

FIG. 2 is a sectional view schematically showing a part of the vicinity of a surface part of a positive electrode core member;

FIG. 3 is a sectional view schematically showing a part of the vicinity of a surface part of an intermediate product of a positive electrode that is formed by filling a positive electrode mixture in the positive electrode core member;

FIG. 4 is a sectional view schematically showing a part of the vicinity of a surface part of a non-sintered positive electrode in which a deposited film is used as a surface layer;

FIG. 5 is a sectional view schematically showing a part of the vicinity of a surface part of a non-sintered positive electrode in which a lath metal is used as the surface layer; and

FIG. 6 is a perspective image of a transverse section of a battery.

## DETAILED DESCRIPTION OF THE PREFERRED EMBODIMENTS

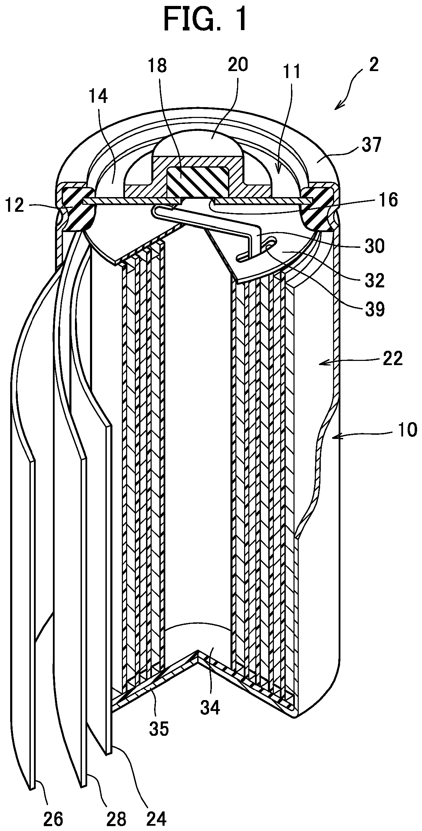

Hereinafter, an alkaline secondary battery to which the present invention is applied will be described with reference to the drawings. The alkaline secondary battery to which the present invention is applied is not particularly limited. For example, a case where the present invention is applied to an AA-size cylindrical nickel hydride secondary battery (hereinafter, referred to as a battery) 2 shown in FIG. 1 will be described as an example.

As shown in FIG. 1, the battery 2 includes an outer can 10 having a bottomed cylindrical shape in which an upper end is opened. The outer can 10 has electric conductivity, and a bottom wall 35 thereof functions as a negative electrode terminal. A sealing member 11 is fixed to the opening of the outer can 10. The sealing member 11, which includes a lid plate 14 and a positive electrode terminal 20, seals the outer can 10 and provides the positive electrode terminal 20. The lid plate 14 is a disk-shaped member having electric conductivity. The lid plate 14 and a ring-shaped insulating packing 12 surrounding the lid plate 14 are disposed in the opening of the outer can 10, and the insulating packing 12 is fixed to an opening rim 37 of the outer can 10 by the caulking of the opening rim 37 of the outer can 10. That is, the lid plate 14 and the insulating packing 12 close the opening of the outer can 10 in an airtight manner, in cooperation with each other.

Here, the lid plate 14 has a central through-hole 16 at the center, and a rubber valve member 18 to block the central through-hole 16 is disposed on the outer surface of the lid plate 14. Furthermore, the positive electrode terminal 20 having a cylindrical shape with a flange and made of metal is electrically connected with the outer surface of the lid plate 14, so as to cover the valve member 18. The positive electrode terminal 20 presses the valve member 18 to the lid plate 14. On the positive electrode terminal 20, an unillustrated venting hole is opened.

In normal times, the central through-hole 16 is closed by the valve member 18, in an airtight manner. However, when the internal pressure rises by the generation of gas in the outer can 10, the valve member 18 is compressed by the internal pressure, and the central through-hole 16 is opened. As a result, the gas is released from the outer can 10 to the exterior through the central through-hole 16 and the venting hole (not illustrated) on the positive electrode terminal 20. That is, the central through-hole 16, the valve member 18 and the positive electrode terminal 20 form a safety valve for the battery.

An electrode group 22 is put in the outer can 10. The electrode group 22 includes a positive electrode 24, a negative electrode 26 and a separator 28 each of which has a belt shape, and they are spirally wound while the separator 28 is sandwiched between the positive electrode 24 and the negative electrode 26. That is, the positive electrode 24 and the negative electrode 26 are overlapped on each other, while the separator 28 is interposed. The outermost circumference of the electrode group 22 is formed by a part (outermost circumference part) of the negative electrode 26, and contacts with an inner circumference wall surface of the outer can 10. That is, the negative electrode 26 and the outer can 10 are electrically connected with each other.

In the outer can 10, a positive electrode lead 30 is disposed between one end of the electrode group 22 and the lid plate 14. Specifically, one end of the positive electrode lead 30 is connected with the positive electrode 24, and the other end is connected with the lid plate 14. Accordingly, the positive electrode terminal 20 and the positive electrode 24 are electrically connected with each other through the positive electrode lead 30 and the lid plate 14. Here, an upper part insulating member 32 having a circular shape is disposed between the lid plate 14 and the electrode group 22, and the positive electrode lead 30 extends through a slit 39 provided on the upper part insulating member 32. Further, a lower part insulating member 34 having a circular shape is disposed between the electrode group 22 and a bottom part of the outer can 10.

Furthermore, a predetermined amount of alkaline electrolyte (not illustrated) is poured, in the outer can 10. The electrode group 22 is impregnated with the alkaline electrolyte, and charge and discharge reactions between the positive electrode 24 and the negative electrode 26 proceed. As the alkaline electrolyte, it is preferable to use an alkaline electrolyte containing KOH, NaOH or LiOH as a solute.

As the material of the separator 28, for example, a material in which a hydrophilic functional group is added to a non-woven fabric made of a polyamide fiber, a material in which a hydrophilic functional group is added to a non-woven fabric made of a polyolefin fiber such as polyethylene and polypropylene, or the like can be used.

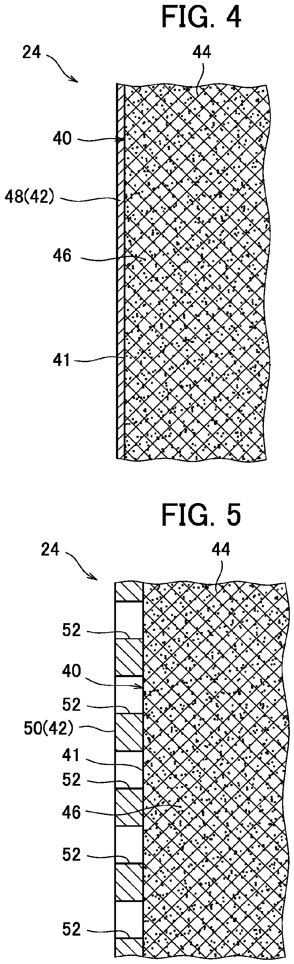

As shown in FIG. 4, the positive electrode 24 includes a positive electrode body 40 and a surface layer 42 existing on a surface part 41 of the positive electrode body 40.

The above positive electrode body 40 includes a positive electrode core member 44 and a positive electrode mixture 46 filled in the positive electrode core member 44.

The positive electrode core member 44 is formed of an electrically conductive material having a three-dimensional network structure. Specifically, a net-like, sponge-like or fibrous nickel-plated metallic body or a foamed nickel can be used.

The positive electrode mixture 46 contains a positive electrode active material particle and a binder. The binder acts to bind positive electrode active material particles on each other and bind the positive electrode mixture on the positive electrode core member 44. Here, as the binder, for example, carboxymethyl cellulose, methyl cellulose, PTFE (polytetrafluoroethylene) dispersion, HPC (hydroxypropyl cellulose) dispersion, or the like can be used.

As the positive electrode active material particle, a nickel hydroxide particle or a high-order nickel hydroxide particle is used. Here, it is preferable that an electrically conductive layer containing cobalt oxyhydroxide be formed on the surface of the nickel hydroxide particle. Further, it is preferable that zinc or cobalt be dissolved in the nickel hydroxide particle, as necessary.

As necessary, it is preferable to add a conducting agent and a positive electrode additive agent to the positive electrode mixture 46.

As the conducting agent, for example, one kind or two or more kinds selected from the group consisting of cobalt compounds such as cobalt oxide (CoO) and cobalt hydride ($Co(OH)_2$) and cobalt (Co) can be used.

The positive electrode additive agent is added for improving the property of the positive electrode, and for example, yttrium oxide, niobium oxide, zinc oxide or the like can be used.

The surface layer 42 existing on the surface part 41 of the positive electrode body 40 contains nickel. Specifically, the surface layer 42 is formed of a material containing mainly nickel. As the material containing mainly nickel, according to the present invention, a pure nickel having a purity of 99.5% or more, or a nickel alloy in which the content of nickel is more than those of other elements is employed.

Nickel is a material having a lower charge acceptability than nickel hydroxide as the positive electrode active material. At a part of such a material having a low charge acceptability, a reaction to generate oxygen gas due to overcharge occurs preferentially, at the time of a continuous charge of the battery. When the material having a low charge acceptability is positioned at a surface portion of the positive electrode, oxygen gas is generated mainly at the surface portion of the positive electrode, at the time of the continuous charge of the battery. Therefore, at a portion other than the surface portion of the positive electrode, that is, at a portion within the positive electrode where the positive electrode active material is filled, the generation of oxygen gas is reduced to a smaller amount than at the surface portion of the positive electrode. Therefore, spaces associated with the generation of oxygen gas are hard to be generated between the positive electrode core member and the positive electrode active material and between the positive electrode active materials. Thereby, the alkaline electrolyte to enter the positive electrode is reduced to a small amount, and the positive electrode is prevented from swelling. As a result, it is possible to prevent the occurrence of the dryout phenomenon, and it is possible to increase the life of the battery when the continuous charge is performed.

Here, the charge acceptability means the ratio of an actually dischargeable capacity to the maximum chargeable capacity, and indicates ease of the charge. A high charge acceptability shows that it is easy to perform the charge, and a ·low charge acceptability shows that it is hard to perform the charge.

Here, when the surface part 41 of the positive electrode body 40 is completely covered with the surface layer 42, the contact between the alkaline electrolyte and the positive electrode active material is blocked, and the charge and discharge reactions are inhibited. Therefore, the surface layer 42 is formed such that liquid permeability is secured. That is, it is preferable that the surface layer 42 be formed so as to partially cover the surface part of the positive electrode body 40.

For example, the positive electrode 24 can be produced as follows.

First, a positive electrode mixture slurry containing positive electrode active material powders that are aggregates of the positive electrode active material particle, water and the binder is prepared. The positive electrode mixture slurry is prepared while powders of the electrically conductive material and powders of the positive electrode additive agent are added as necessary.

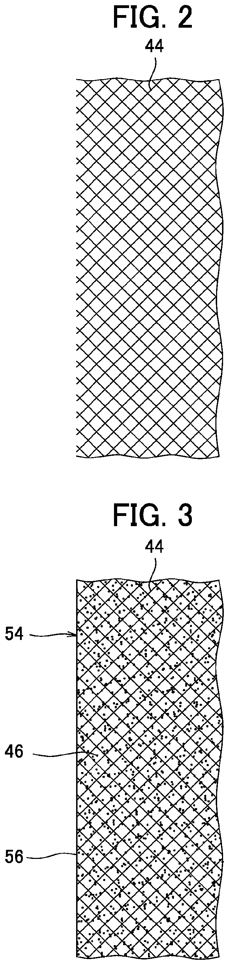

Next, as the positive electrode core member 44, for example, a sheet of the foamed nickel 44 shown in FIG. 2 is prepared. FIG. 2 is a sectional view showing a part of the vicinity of a surface part of the sheet of the foamed nickel 44. In FIG. 2, the foamed nickel 44 is schematically expressed, although the foamed nickel 44 actually has a complex three-dimensional network structure.

Then, the obtained positive electrode mixture slurry is filled in the foamed nickel 44, and thereafter, a drying treatment is performed. In this way, an intermediate product 54 of the positive electrode in which the positive electrode mixture 46 is filled in the foamed nickel 44 is produced (see FIG. 3).

Next, the surface layer 42 containing nickel is formed.

The method for forming the surface layer 42 is not particularly limited, and examples of thereof include a method of forming a thin film, a method of supporting a foil, and the like.

First, the method of forming the thin film will be described.

The intermediate product 54 of the positive electrode obtained in the above way is processed to a predetermined thickness by rolling, and thereafter, is cut to a predetermined size, so that the positive electrode body 40 is produced. Then, a thin film of a pure nickel or a nickel alloy is formed on the surface part 41 of the positive electrode body 40, using a sputtering method, a vapor deposition method or a plating method. In this way, the positive electrode 24 shown in FIG. 4 that includes the positive electrode body 40 including the foamed nickel 44 and the positive electrode mixture 46 filled in the foamed nickel 44 and a thin film 48 (surface layer 42) existing on the surface part 41 of the positive electrode body 40 and containing nickel is obtained.

Here, the surface part 41 of the positive electrode body 40 is formed such that many positive electrode active material particles are randomly stacked, and has a porous condition, and therefore, the liquid permeability of the alkaline electrolyte is high enough not to inhibit the battery reactions. When the vapor deposition or the like of nickel is performed to the surface part 41 of the positive electrode body 40 having such a condition, the thin film 48 of nickel is formed such that the condition is similar to the condition of the surface part 41 of the positive electrode body 40. Therefore, the passing of the alkaline electrolyte is not completely blocked, and the liquid permeability is maintained. That is, even when the thin film 48 exists on the surface part 41, the liquid permeability of the alkaline electrolyte is maintained, and the battery reactions are not inhibited.

Next, the method of supporting the foil will be described.

A perforated foil 50 containing nickel is overlapped on a surface portion 56 of the intermediate product 54 of the positive electrode obtained in this way. Then, in this state, the intermediate product 54 and the perforated foil 50, together, are processed to a predetermined thickness by rolling, and thereafter, is cut to a predetermined size. As the above perforated foil 50 containing nickel, it is preferable to use a lath metal made of nickel or a nickel alloy, or a punching metal made of nickel or a nickel alloy. In this way, the positive electrode 24 shown in FIG. 5 that includes the positive electrode body 40 including the foamed nickel 44 and the positive electrode mixture 46 filled in the foamed nickel 44 and the perforated foil 50 (surface layer 42) existing on the surface part 41 of the positive electrode body 40 and containing nickel is obtained.

Here, the perforated foil 50 of the lath metal, the punching metal or the like has a plurality of through-holes 52 in the thickness direction. Therefore, even when the perforated foil 50 exists on the surface part 41 of the positive electrode body 40, the surface part 41 of the positive electrode body 40 is not completely covered, and is covered only partially as shown in FIG. 5. Therefore, even when the perforated foil 50 exists on the surface part 41, the liquid permeability of the alkaline electrolyte in the positive electrode body 40 is maintained, and the battery reactions are not inhibited.

Next, the negative electrode 26 will be described.

The negative electrode 26 includes an electrically conductive negative electrode core member having a belt shape, and a negative electrode mixture is held in the negative electrode core member.

The negative electrode core member is a sheet-shaped metal member on which through-holes are distributed, and for example, a punching metal sheet can be used. The negative electrode mixture is filled into the through-holes of the negative electrode core member, and in addition, is held on both surfaces of the negative electrode core member as layers.

The negative electrode mixture contains a hydrogen storing alloy particle that can store and release hydrogen as a negative electrode active material, a conducting agent, and a binder. The binder acts to bind the hydrogen storing alloy particle, a negative electrode additive agent and the conducting agent on each other and bind the negative electrode mixture on the negative electrode core member. Here, as the binder, a hydrophilic or hydrophobic polymer can be used, and as the conducting agent, carbon black or graphite can be used. As necessary, a negative electrode additive agent may be added.

As the hydrogen storing alloy of the hydrogen storing alloy particle, alloys that are used in general nickel hydride secondary batteries are suitably used.

For example, the negative electrode 26 can be produced as follows.

First, hydrogen storing alloy powders that are aggregates of the hydrogen storing alloy particle, the conducting agent, the binder and water are mixed and kneaded, and thereby, a negative electrode mixture paste is prepared. The obtained negative electrode mixture paste is applied on the negative electrode core member, and is dried. After the drying, rolling and cutting are performed to the negative electrode core member to which the hydrogen storing alloy particle and the like are attached. Thereby, the negative electrode 26 is produced.

The positive electrode 24 and negative electrode 26 produced in the above way are spirally wound in a state where the separator 28 is interposed, so that the electrode group 22 is formed.

The electrode group 22 obtained in this way is put in the outer can 10. Subsequently, a predetermined amount of alkaline electrolyte is poured in the outer can 10. Thereafter, the outer can 10 containing the electrode group 22 and the alkaline electrolyte is sealed by the lid plate 14 including the positive electrode terminal 20, so that the battery 2 according to the present invention is obtained. The obtained battery 2 becomes a usable state by an initial activation treatment.

Here, in FIG. 3 to FIG. 5, the foamed nickel 44 is schematically expressed similarly to FIG. 2, and the thin film 48 and perforated foil 50 as the surface layer 42 are schematically expressed.

[Examples]

1. Production of Battery

(Example 1)

(1) Production of Positive Electrode

Nickel sulfate, zinc sulfate and cobalt sulfate were measured such that 3 mass% zinc and 1 mass% cobalt were obtained with respect to nickel. They were added in 1 N sodium hydroxide aqueous solution containing ammonium ions, and thereby, a mixed aqueous solution was prepared. While the obtained mixed aqueous solution was being stirred, 10 N sodium hydroxide aqueous solution was gradually added in the mixed aqueous solution, and was reacted. During the reaction, pH was stabilized at 13 to 14, and a base particle containing mainly nickel hydroxide and having zinc and cobalt dissolved was made.

The obtained base particle was washed in ten times its volume of pure water three times, and thereafter, dewatering and drying were performed. The obtained base particle had a spherical shape with an average particle diameter of 10 μm.

Next, the obtained base particle was input in an ammonia aqueous solution, and a cobalt sulfate aqueous solution was added while pH was maintained at 9 to 10 during the reaction. Thereby, the base particle became a core, and cobalt hydroxide was deposited on the surface of the core, so that an intermediate particle having a cobalt hydroxide layer with a thickness of about 0.1 μm was obtained. Next, the intermediate particle was circulated in a high-temperature air containing oxygen, under an environment of 80°C, and a heating treatment was performed for 45 minutes. Thereby, cobalt hydroxide on the surface of the intermediate particle became cobalt oxyhydrozide having a high electric conductivity. That is, an electrically conductive layer of cobalt oxyhydrozide was formed. Thereafter, the particle having the electrically conductive layer of cobalt oxyhydrozide was extracted by filtering, was washed in water, and then was dried at 60°C. In this way, positive electrode active material powders that were aggregates of the positive electrode active material particle having the electrically conductive layer containing cobalt oxyhydrozide on the surface of the base particle were obtained.

Next, 0.3 parts by mass of yttrium oxide powder, 0.3 parts by mass of niobium oxide powder, 0.2 parts by mass of HPC powder, and 0.3 parts by mass PTFE dispersion were mixed in 100 parts by mass of the produced positive electrode active material powder, and thereby, a positive electrode active material slurry was prepared. The positive electrode active material slurry was filled in foamed nickel as the positive electrode core member, and thereafter, was dried. Thereby, an intermediate product of the positive electrode in which the positive electrode active material particle was filled in foamed nickel was obtained.

The obtained intermediate product was processed by rolling so as to have a thickness of 0.52 mm, and thereafter, was cut to a predetermined size, so that a cut piece (the positive electrode body 40) having a predetermined shape was obtained.

Next, the obtained positive electrode body 40 was set in a vacuum deposition apparatus, and the vacuum deposition of nickel having a purity of 99.5% was performed to the surface part 41 of the positive electrode body 40. At this time, the attached amount of the deposited film (thin film) of nickel was 0.05 mg/cm$^2$.

Thus, the positive electrode 24 including the positive electrode body 40 and the thin film 48 (surface layer 42) of nickel on the surface part 41 of the positive electrode body 40 was produced. For the positive electrode 24, the filling amount of the positive electrode active material was adjusted such that the capacity per one positive electrode is 1000 mAh, based on the theoretical capacity of nickel hydroxide, which is 289 mAh/g.

(2) Production of Hydrogen Storing Alloy and Negative Electrode

First, a rare-earth component containing 12 mass% La and 88 mass% Sm was prepared. The obtained rare-earth component, Mg, Ni and Al were measured, and a mixture in which the ratio of them was 0.90 : 0.10 : 3.40 : 0.10 in mole ratio was prepared. The obtained mixture was melted in an induction melting furnace, and the hot metal is poured into a cast and then is cooled to room temperature (about 25°C), so that an ingot of a hydrogen storing alloy was obtained.

Next, the ingot was kept at a temperature of 1000°C under an argon gas atmosphere for 10 hours, as a heating treatment. Then, after the heating treatment, the ingot was cooled to room temperature (about 25°C). For a sample taken from the ingot after the heating treatment, the composition analysis was performed by a high-frequency plasma spectrometry (ICP). As a result, the composition of the hydrogen storing alloy was $(La_{0.12}Sm_{0.88})_{0.90}Mg_{0.10}Ni_{3.40}Al_{0.10}$.

Next, the ingot of the hydrogen storing alloy after the heating treatment was mechanically ground under an argon gas atmosphere, and powders that were aggregates of the hydrogen storing alloy particle were obtained. Here, the screening of the obtained hydrogen storing alloy powders was performed, and hydrogen storing alloy powders remaining by 400 mesh size to 200 mesh size were selected.

In 100 parts by mass of the obtained hydrogen storing alloy powder, 0.4 parts by mass of sodium polyacrylate powder, 0.1 parts by mass of carboxymethyl cellulose powder, 1.0 parts by mass (solid content conversion) of styrenebutadiene rubber (SBR) dispersion (solid content: 50 mass%), 1.0 parts by mass of carbon black powder, and 30 parts by mass of water were added and kneaded, and thereby, a negative electrode mixture paste was prepared.

The negative electrode mixture paste was evenly applied on both surfaces of a perforated iron plate as the negative electrode core member, such that the thickness was constant. Incidentally, the perforated plate had a thickness of 60 μm, and nickel was plated on the surface.

After the drying of the paste, the rolling of the perforated plate to which the hydrogen storing alloy powders were attached was performed, and the alloy amount per unit volume was increased. Thereafter, the perforated plate was cut, so that the negative electrode 26 for AA size was obtained.

(3) Production of Nickel Hydride Secondary Battery

The obtained positive electrode 24 and negative electrode 26 were spirally wound in a state where the separator 28 was interposed between them, and thereby, the electrode group 22 was produced. The separator 28 used for the production of this electrode group 22 was a sulfone separator obtained by sulfonating a non-woven fabric made of a polypropylene fiber by fuming sulfuric acid and thereafter neutralizing it by a sodium hydroxide aqueous solution, and the thickness was 0.14 mm (weight: 60 g/$m^2$).

Meanwhile, KOH, NaOH and LiOH were measured, and then, KOH, NaOH and LiOH were input in ion-exchange water. Thereby, an alkaline electrolyte mainly containing KOH, containing 5.0 N KOH, 1.0 N NaOH and 1.0 N LiOH, and having a total concentration of 7.0 N was prepared.

Next, the above electrode group 22 was put in the outer can 10 having a bottomed cylindrical shape, and 2.2 ml of the prepared alkaline electrolyte was poured. Thereafter, the opening of the outer can 10 was blocked by the sealing member 11, and an AA-size nickel hydride secondary battery 2 having a nominal capacity of 1000 mAh was produced.

(4) Initial Activation Treatment

The battery 2 was left under an environment of 25°C for a day, and thereafter, the charge was performed at a charging current of 0.1 C for 16 hours. Thereafter, the battery 2 was put in a constant-temperature bath set at 60°C, and was left for 12 hours. Thereafter, the battery 2 was taken out of the constant-temperature bath, and was left and cooled under an environment of 25°C for 3 hours. Then, the discharge was performed at a discharging current of 0.2 C, until the battery voltage became 1.0 V. The initial activation treatment was performed by repeating such charge and discharge works twice. In this way, the battery 2 was put into the usable state.

(Example 2)

A nickel hydride secondary battery 2 in the usable state was produced in the same way as Example 1, except that a positive electrode 24 in which a surface layer 42 formed of a lath metal of nickel existed on the surface part of the positive electrode body 40 was produced by performing the rolling in a state where the lath metal of nickel was placed on the surface of the intermediate product of the positive electrode and not performing the vacuum deposition of nickel.

The lath metal used in the example had a mesh shape formed by providing slits on a foil made of a nickel having a purity of 99.5% and extending the foil, and included skeleton parts of the mesh and rhombic through-holes (openings) formed among the skeleton parts. As the lath metal, a lath metal in which the thickness of the foil was 0.02 mm, the long side size of the opening was 1.0 mm, the short side size of the opening was 0.5 mm and the width of the skeleton part was 0.08 mm was used.

(Comparative Example 1)

A nickel hydride secondary battery in the usable state was produced in the same way as Example 1, except that a positive electrode 24 in which the surface layer 42 did not exist was produced by not performing the vacuum deposition of nickel.

2. Evaluation of Nickel Hydride Secondary Battery

(1) Continuous Charge Characteristic

To the batteries after the initial activation treatment according to Examples 1 and 2 and Comparative Example 1, the continuous charge was performed at 0.1 C (100 mAh) under an environment of 25°C for a month.

For the battery after the continuous charge, the change rate of the thickness of the positive electrode and the content rate of the alkaline electrolyte in the separator were evaluated in the following procedures. The results are shown in Table 1, as the change rate of the thickness of the positive electrode and the content rate of the alkaline electrolyte in the separator.

(i) Change Rate of Thickness of Positive Electrode

First, the battery after the initial activation treatment and before the continuous charge was set in an X-ray CT scanner apparatus (TOSCANER-32300μFD made by Toshiba IT & Control Systems Corporation), and a perspective image of a transverse section of the battery was obtained. Measurement conditions were a tube voltage of 200 kV, a tube current of 154 μA, a full scan of 360°, a single mode of 1024 × 1024, and 800 views.

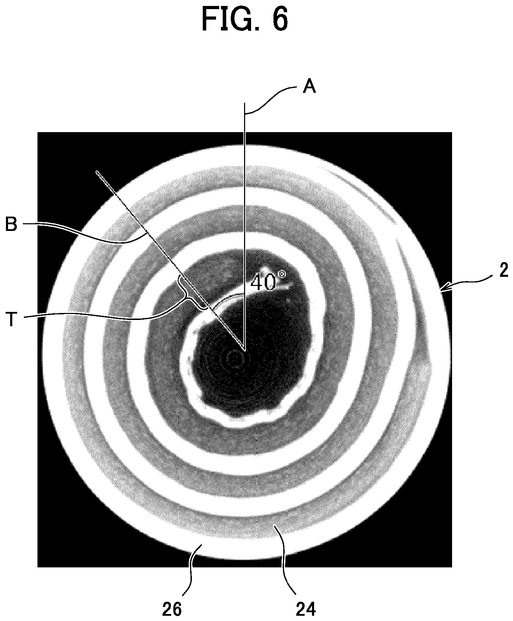

FIG. 6 shows the perspective image of the transverse section of the obtained battery. In FIG. 6, the negative electrode 26 is a white spiral portion, and the positive electrode 24 is a gray portion that exists at an interspace of the negative electrode 26. Here, a measurement line B on a position at an angle of 40 degrees from a reference line A indicating a winding start portion of the positive electrode 24 was assumed. Then, the length (the length of a range denoted by reference character T in FIG. 6) between the first winding portion and second winding portion of the negative electrode 26 that crossed the measurement line B was measured, and this length was defined as the thickness of the positive electrode before the continuous charge.

Next, for the battery after the continuous charge for a month, the length T between the first winding portion and second winding portion of the negative electrode 26 that crossed the measurement B was measured in the same way, and this length was defined as the thickness of the positive electrode after the continuous charge.

Then, the rate of the change in the thickness of the positive electrode between before and after the continuous charge was evaluated from the following Formula (I). The obtained result is shown in Table 1, as the change rate of the thickness of the positive electrode. A larger value of the change rate of the thickness of the positive electrode shows a larger expansion of the positive electrode.

Change Rate [%] of Thickness of Positive Electrode = (Thickness after Continuous Charge - Thickness before Continuous Charge) / Thickness before Continuous Charge × 100 ... (I)

(ii) Content Rate of Alkaline Electrolyte in Separator

The battery after the continuous charge for a month was placed in a glove box, nitrogen gas as an inert gas was sent into the glove box, and the gas retained in the glove box was removed such that the gas retained in the glove box was replaced with the nitrogen gas. Thereby, a so-called nitrogen purge was performed. In the glove box after the nitrogen purge, the battery was broken up. Then, the positive electrode, the negative electrode and the separator were taken out, and each mass was measured. Thereby, the total mass including the mass of the alkaline electrolyte was evaluated for each of the positive electrode, the negative electrode and the separator.

Next, the positive electrode, the negative electrode and the separator were washed in ion-exchange water, and thereafter, were dried in vacuum. Then, the mass after the drying was measured for each of the positive electrode, the negative electrode and the separator. Thereby, the dry mass not including the mass of the alkaline electrolyte was evaluated for each of the positive electrode, the negative electrode and the separator.

Next, the dry mass of the positive electrode was subtracted from the total mass of the positive electrode, and thereby, the mass (hereinafter, referred to as the liquid amount in the positive electrode) of the alkaline electrolyte contained in the positive electrode was evaluated. Furthermore, the dry mass of the negative electrode was subtracted from the total mass of the negative electrode, and thereby, the mass (hereinafter, referred to as the liquid amount in the negative electrode) of the alkaline electrolyte contained in the negative electrode was evaluated. Furthermore, the dry mass of the separator was subtracted from the total mass of the separator, and the mass (hereinafter, referred to as the liquid amount in the separator) of the alkaline electrolyte contained in the separator was evaluated.

Next, the liquid amount in the positive electrode, the liquid amount in the negative electrode and the liquid amount in the separator were summed up, and the total amount of the alkaline electrolyte contained in the positive electrode, the negative electrode and the separator, that is, the electrode group was evaluated.

Then, the degree of the rate of the amount of the alkaline electrolyte held in the separator to the amount of the alkaline electrolyte contained in the whole of the electrolyte group (the positive electrode, the negative electrode and the separator) after the continuous charge was evaluated from the following Formula (II). The obtained result is shown in Table 1, as the content rate of the alkaline electrolyte in the separator. A larger value of the content rate of the alkaline electrolyte in the separator shows that a larger amount of alkaline electrolyte was held in the separator after the continuous charge and the dryout phenomenon was harder to occur.

$$\text{Content Rate [\%] of Alkaline Electrolyte in Separator} = \text{Liquid Amount in Separator} / \text{Total Amount of Alkaline Electrolyte} \times 100 \quad \ldots \text{(II)}$$

[Table 1]

[Table 1]

| | Existence of surface layer | Type of surface layer | Change rate of thickness of positive electrode [%] | Content rate of alkaline electrolyte in separator [%] |
|---|---|---|---|---|
| Example 1 | Present | Ni deposited film | 24 | 21 |
| Example 2 | Present | Ni lath metal support | 21 | 23 |
| Comparative Example 1 | Absent | - | 50 | 16 |

(2) Consideration

(i) In the batteries in Examples 1 and 2, the change rate of the thickness of the positive electrode is 21 to 24%, and it is found that the change in the thickness of the positive electrode after the continuous charge is smaller than the battery in Comparative Example 1, in which the change rate of the thickness of the positive electrode is 50%. Further, in the batteries in Examples 1 and 2, the content rate of the alkaline electrolyte in the separator is 21 to 23%, and it is found that the amount of the alkaline electrolyte held in the separator after the continuous charge is larger than the battery in Comparative Example 1, in which the content rate of the alkaline electrolyte in the separator is 16%.

The positive electrode of the battery in Comparative Example 1 is a conventional type that does not include the surface layer containing nickel, and generates oxygen gas from the interior of the positive electrode to the surface part in whole, when the continuous charge of the battery is performed. It is thought that the generation of the oxygen gas generated many relatively large bubble spaces due to the oxygen gas between the positive electrode core member and the positive electrode active material and between positive electrode active materials. As a result, it is thought that the positive electrode expanded and the thickness of the positive electrode increased relatively. When the positive electrode expands in this way, the positive electrode presses the adjacent separator, and pushes the alkaline electrolyte out of the separator. Then, the pushed alkaline electrolyte is absorbed in the spaces generated in the positive electrode. This is apparent also from the fact that the content rate of the alkaline electrolyte in the separator is as small as 16%.

It is thought that the swelling of the positive electrode occurred in the battery in the Comparative Example 1, resulting in the decrease in the life of the battery by the dryout phenomenon.

On the other hand, each of the positive electrodes of the batteries in Examples 1 and 2 includes the surface layer containing nickel. Nickel has a lower charge acceptability than nickel hydroxide as the positive electrode active material. When the continuous charge of the battery is performed, oxygen gas is preferentially generated at a part of the material having a low charge acceptability. Therefore, the generation of oxygen gas occurs preferentially at the surface part of the positive electrode, and is relatively hard to occur in the interior of the positive electrode. Since oxygen gas is intensively generated at the surface part of the positive electrode, the generation of spaces associated with the generation of oxygen gas is suppressed in the interior of the positive electrode. When the generation of spaces is suppressed in the positive electrode, by an amount equivalent to the suppression, the expansion of the positive electrode is suppressed and the amount of the alkaline electrolyte to be absorbed in the positive electrode is reduced. The reduction in the expansion of the positive electrode reduces the amount of the alkaline electrolyte to be pushed out of the separator. Therefore, the swelling of the positive electrode is suppressed, and the alkaline electrolyte is hard to be decreased in the separator. As a result, it is thought that the dryout phenomenon is prevented and the life of the battery is increased.

(ii) Whereas the change rate of the thickness of the positive electrode in Example 1 is 24%, the change rate of the thickness of the positive electrode in Example 2 is 21%, and it is found that the positive electrode in Example 2 is harder to expand than the positive electrode in Example 1 when the continuous charge of the battery is performed. Further, whereas the content rate of the alkaline electrolyte in the separator in Example 1 is 21%, the content rate of the alkaline electrolyte in the separator in Example 2 is 23%, and it is found that, in Example 2, the alkaline electrolyte in the separator is harder to decrease than in Example 1 when the continuous charge of the battery is performed.

This is thought to be because the nickel lath metal exerted the effect to physically suppress the deformation of the positive electrode so that the expansion of the positive electrode was further suppressed.

(iii) Thus, it can be said that it is possible to obtain the non-sintered positive electrode allowing the increase in the life of the battery at the time of the continuous charge according to the present invention. Further, it can be said that the alkaline secondary battery including the non-sintered positive electrode according to the present invention is a battery having an excellent life characteristic at the time of the continuous charge.

## Claims

**1.** A non-sintered positive electrode (24) for an alkaline secondary battery, the non-sintered positive electrode (24) being included in the alkaline secondary battery, the non-sintered positive electrode (24) for the alkaline secondary battery being **characterized in that**
the non-sintered positive electrode (24) comprises:

a positive electrode body (40) including a positive electrode core member (44) and a positive electrode mixture (46) that is filled in the positive electrode core member (44); and
a surface layer (42) existing on a surface part (41) of the positive electrode body (40),
the positive electrode mixture (46) contains nickel hydroxide as a positive electrode active material, and
the surface layer (42) contains a pure nickel having a purity of 99.5% or more, or a nickel alloy in which the content of nickel is more than those of other elements, wherein the surface layer 42 is formed such that liquid permeability is secured.

**2.** The non-sintered positive electrode (24) for the alkaline secondary battery according to claim 1, **characterized in that**

the surface part (41) of the positive electrode body (40) has a porous condition, and
the surface layer (42) is formed to be similar to the porous condition.

**3.** The non-sintered positive electrode (24) for the alkaline secondary battery according to claim 1 or 2, **characterized in that**
the surface layer (42) is formed of a thin film (48) that contains nickel.

**4.** The non-sintered positive electrode (24) for the alkaline secondary battery according to claim 3, **characterized in that** the thin film (48) is either a deposited film or a plated film.

**5.** The non-sintered positive electrode (24) for the alkaline secondary battery according to claim 1, **characterized in that** the surface layer (42) is formed of a perforated foil (50) that contains nickel and that has many through-holes.

**6.** The non-sintered positive electrode (24) for the alkaline secondary battery according to claim 5, **characterized in that** the perforated foil (50) is either a lath metal or a punching metal.

**7.** An alkaline secondary battery (2) comprising: an outer can (10); and an electrode group (22) that is put in the outer can (10) together with an alkaline electrolyte, the alkaline secondary battery (2) being **characterized in that**

the electrode group (22) includes a positive electrode (24) and a negative electrode (26) that are overlapped while a separator (28) is interposed, and
the positive electrode (24) is the non-sintered positive electrode (24) according to any one of claims 1 to 6.

## Patentansprüche

1. Nichtgesinterte positive Elektrode (24) für eine alkalische Sekundärbatterie, wobei die nichtgesinterte positive Elektrode (24) in der alkalischen Sekundärbatterie enthalten ist, wobei die nichtgesinterte positive Elektrode (24) für die alkalische Sekundärbatterie **dadurch gekennzeichnet ist, dass**
die nichtgesinterte positive Elektrode (24) umfasst:

   einen positiven Elektrodenkörper (40), der ein positives Elektrodenkernteil (44) und ein positives Elektrodengemisch (46) enthält, das in das positive Elektrodenkernteil (44) eingefüllt ist; und
   eine Oberflächenschicht (42), die auf einem Oberflächenteil (41) des positiven Elektrodenkörpers (40) vorhanden ist,
   wobei das positive Elektrodengemisch (46) Nickelhydroxid als positives Elektrodenaktivmaterial enthält, und
   die Oberflächenschicht (42) reinen Nickel mit einer Reinheit von 99,5 % oder mehr oder eine Nickellegierung enthält, in welcher der Gehalt an Nickel mehr als derjenige von anderen Elementen ist, wobei die Oberflächenschicht (42) so ausgebildet ist, dass eine Flüssigkeitspermeabilität sichergestellt ist.

2. Nichtgesinterte positive Elektrode (24) für die alkalische Sekundärbatterie nach Anspruch 1, **dadurch gekennzeichnet, dass**

   das Oberflächenteil (41) des positiven Elektrodenkörpers (40) einen porösen Zustand hat, und
   die Oberflächenschicht (42) dem porösen Zustand ähnlich ausgebildet ist.

3. Nichtgesinterte positive Elektrode (24) für die alkalische Sekundärbatterie nach Anspruch 1 oder 2, **dadurch gekennzeichnet, dass**
die Oberflächenschicht (42) aus einer Dünnschicht (48) ausgebildet ist, die Nickel enthält.

4. Nichtgesinterte positive Elektrode (24) für die alkalische Sekundärbatterie nach Anspruch 3, **dadurch gekennzeichnet, dass**
die Dünnschicht (48) entweder eine abgeschiedene Schicht oder eine plattierte Schicht ist.

5. Nichtgesinterte positive Elektrode (24) für die alkalische Sekundärbatterie nach Anspruch 1, **dadurch gekennzeichnet, dass**
die Oberflächenschicht (42) aus einer perforierten Folie (50) ausgebildet ist, die Nickel enthält und viele Durchgangsöffnungen hat.

6. Nichtgesinterte positive Elektrode (24) für die alkalische Sekundärbatterie nach Anspruch 5, **dadurch gekennzeichnet, dass**
es sich bei der perforierten Folie (50) entweder um ein Lattenmetall oder ein Stanzmetall handelt.

7. Alkalische Sekundärbatterie (2), umfassend: eine äußere Dose (10) und eine Elektrodengruppe (22), die zusammen mit einem alkalischen Elektrolyten in die äußere Dose (10) eingebracht ist, wobei die alkalische Sekundärbatterie (2) **dadurch gekennzeichnet ist, dass**

   die Elektrodengruppe (22) eine positive Elektrode (24) und eine negative Elektrode (26) enthält, die überlappend sind, während ein Separator (28) dazwischen eingesetzt ist, und
   die positive Elektrode (24) die nichtgesinterte positive Elektrode (24) nach einem der Ansprüche 1 bis 6 ist.

## Revendications

1. Électrode positive (24) non frittée pour une batterie alcaline secondaire, l’électrode positive (24) non frittée étant incluse dans la batterie alcaline secondaire, l'électrode positive (24) non frittée pour la batterie alcaline secondaire étant **caractérisée en ce que**
l'électrode positive (24) non frittée comprend :

un corps d'électrode positive (40) incluant un élément de noyau d'électrode positive (44) et un mélange d'électrode positive (46) qui remplit l'élément de noyau d'électrode positive (44) ; et
une couche de surface (42) disposée sur une partie de surface (41) du corps d'électrode positive (40),
le mélange d'électrode positive (46) contient de l'hydroxyde de nickel comme matériau actif d'électrode positive, et
la couche de surface (42) contient un nickel pur ayant une pureté de 99,5 % ou plus, ou un alliage de nickel dans lequel la teneur en nickel est supérieure à celle en autres éléments, sachant que la couche de surface (42) est formée de telle sorte qu'une perméabilité aux liquides soit assurée.

2. L'électrode positive (24) non frittée pour la batterie alcaline secondaire selon la revendication 1, **caractérisée en ce que**

la partie de surface (41) du corps d'électrode positive (40) présente un état poreux, et
la couche de surface (42) est formée pour être similaire à l'état poreux.

3. L'électrode positive (24) non frittée pour la batterie alcaline secondaire selon la revendication 1 ou 2, **caractérisée en ce que**
la couche de surface (42) est formée d'un film mince (48) qui contient du nickel.

4. L'électrode positive (24) non frittée pour la batterie alcaline secondaire selon la revendication 3, **caractérisée en ce que**
le film mince (48) est soit un film déposé, soit un film plaqué.

5. L'électrode positive (24) non frittée pour la batterie alcaline secondaire selon la revendication 1, **caractérisée en ce que**
la couche de surface (42) est formée d'une feuille perforée (50) qui contient du nickel et qui présente de nombreux trous traversants.

6. L'électrode positive (24) non frittée pour la batterie alcaline secondaire selon la revendication 5, **caractérisée en ce que**
la feuille perforée (50) est soit du métal en lattes, soit du métal à poinçonnage.

7. Batterie alcaline secondaire (2) comprenant : un boîtier extérieur (10) ; et un groupe d'électrodes (22) qui est placé dans le boîtier extérieur (10) conjointement avec un électrolyte alcalin, la batterie alcaline secondaire (2) étant **caractérisée en ce que**

le groupe d'électrodes (22) inclut une électrode positive (24) et une électrode négative (26) qui se chevauchent tandis qu'un séparateur (28) est interposé, et
l'électrode positive (24) est l'électrode positive (24) non frittée selon l'une quelconque des revendications 1 à 6.

FIG. 1
18
20
11
2
14
37
12
16
30
32
39
22
10
34
35
26
28
24

FIG. 2

44

FIG. 3

44
54
46
56

FIG. 4

24
44
40
48(42)
46
41

FIG. 5

24
44
52
40
52
50(42)
41
52
46
52
52

A
B
T
40°
2
26
24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60131765 A
- US 2001008729 A1
- JP H10154525 A